(19) Europäisches Patentamt
European Patent Office
Office européen des brevets

(11) **EP 1 952 637 B1**

(12) **FASCICULE DE BREVET EUROPEEN**

(45) Date de publication et mention
de la délivrance du brevet:
**06.01.2010 Bulletin 2010/01**

(51) Int Cl.:
**H04N 7/26** (2006.01)

(21) Numéro de dépôt: **06819126.1**

(22) Date de dépôt: **24.10.2006**

(86) Numéro de dépôt international:
**PCT/EP2006/067698**

(87) Numéro de publication internationale:
**WO 2007/060071 (31.05.2007 Gazette 2007/22)**

(54) **PROCEDE ET DISPOSITIF DE CODAGE D'UNE IMAGE VIDEO**

VERFAHREN UND EINRICHTUNG ZUR CODIERUNG EINES VIDEOBILDES

METHOD AND DEVICE FOR CODING A VIDEO IMAGE

(84) Etats contractants désignés:
**DE FR GB**

(30) Priorité: **22.11.2005 FR 0553553**

(43) Date de publication de la demande:
**06.08.2008 Bulletin 2008/32**

(73) Titulaire: **Thomson Licensing**
**92100 Boulogne-Billancourt (FR)**

(72) Inventeurs:
• **THOREAU, Dominique**
**F-35510 Cesson-Sévigné (FR)**
• **FRANCOIS, Edouard**
**F-35890 Bourg des Comptes (FR)**
• **HUGUENEL, Lila**
**F-35700 Rennes (FR)**

(74) Mandataire: **Ruellan-Lemonnier, Brigitte**
**Thomson multimedia**
**Patent Department**
**46 Quai A. Le Gallo**
**92648 Boulogne Cedex (FR)**

(56) Documents cités:
**EP-A- 0 982 951**

• **HYUNGJOON KIM ET AL: "Low-complexity macroblock mode selection for H.264/AVC encoders" IMAGE PROCESSING, 2004. ICIP '04. 2004 INTERNATIONAL CONFERENCE ON SINGAPORE 24-27 OCT. 2004, PISCATAWAY, NJ, USA,IEEE, 24 octobre 2004 (2004-10-24), pages 765-768, XP010785115 ISBN: 0-7803-8554-3**
• **HUANG Y-W ET AL: "ANALYSIS, FAST ALGORITHM, AND VLSI ARCHITECTURE DESIGN FOR H.264/AVC INTRA FRAME CODER" IEEE TRANSACTIONS ON CIRCUITS AND SYSTEMS FOR VIDEO TECHNOLOGY, IEEE SERVICE CENTER, PISCATAWAY, NJ, US, vol. 15, no. 3, mars 2005 (2005-03), pages 378-401, XP001225785 ISSN: 1051-8215**
• **CHANGSUNG KIM ET AL: "A Feature-based Approach to Fast H.264 Intra/Inter Mode Decision" CIRCUITS AND SYSTEMS, 2005. ISCAS 2005. IEEE INTERNATIONAL SYMPOSIUM ON KOBE, JAPAN 23-26 MAY 2005, PISCATAWAY, NJ, USA,IEEE, 23 mai 2005 (2005-05-23), pages 308-311, XP010815539 ISBN: 0-7803-8834-8**
• **KIM H ET AL: "LOW-COMPLEXITY RATE-DISTORTION OPTIMAL MACROBLOCK MODE SELECTION AND MOTION ESTIMATION FOR MPEG-LIKE VIDEO CODERS" juillet 2005 (2005-07), IEEE TRANSACTIONS ON CIRCUITS AND SYSTEMS FOR VIDEO TECHNOLOGY, IEEE SERVICE CENTER, PISCATAWAY, NJ, US, PAGE(S) 823-834 , XP001233004 ISSN: 1051-8215 le document en entier**

**Description**

L'invention concerne un procédé et dispositif de codage d'images vidéo, plus particulièrement un algorithme de décision de mode de codage au niveau d'un bloc d'une image.

Le domaine est celui de la transmission et du stockage vidéo exploitant des algorithmes de compression compatibles des normes telles que MPEG2, MPEG4-AVC.

Le but de la décision de codage dans un codeur est de choisir, selon un critère défini, le meilleur mode de codage pour une entité de l'image, généralement un macrobloc comprenant un bloc de luminance de taille 16x16 pixels, parmi un certain nombre de modes dits modes intra image prenant en compte des informations dans l'image en cours de codage et modes inter image prenant en compte des informations dans une ou plusieurs images précédemment codées.

L'algorithme dédié à la décision de codage peut, selon la complexité d'implémentation disponible, prendre la forme dite :

- a priori
- a posteriori.

L'algorithme basé a priori est le plus simple mais offre la performance la plus modeste, en terme de débit / distorsion, la forme la plus complexe étant l'algorithme basé a posteriori, laquelle est la plus performante.

Le processus de décision de codage du macrobloc est réalisé de diverses manières et a fait l'objet de nombreux travaux qu'on peut cependant classer de la façon suivante :

Dans une première approche le meilleur mode de prédiction inter est obtenu parmi l'ensemble des modes de prédiction inter, ensuite le meilleur mode de prédiction intra est déterminé parmi l'ensemble des modes de prédiction intra s'il y a plusieurs modes de codage intra, puis une sélection est faite entre le meilleur mode inter et le meilleur mode intra pour enfin effectuer le codage du macrobloc. Ce type de démarche correspond en général à celle proposée dans les algorithmes des modèles de référence. Les outils algorithmiques s'appuient sur des mesures de différences inter-images et de calcul d'activité locale. On se référera par exemple au document MPEG-4 Video Verification Model version 18.0, paragraphe 3.3.2.3 (INTRA/INTER mode decision).

Une autre technique est totalement a posteriori et consiste à considérer, pour chaque mode de codage, le coût de codage du macrobloc ainsi que la qualité de restitution. Celle-ci est obtenue par calcul du rapport signal à bruit ou psnr, acronyme de l'expression anglaise peak signal-to-noise ratio, ou bien de la somme des différences en valeur absolue ou sad, acronyme de l'expression anglaise sum of absolute difference, ou bien de la somme des différences en valeur absolue des transformées ou satd, acronyme de l'expression anglaise sum of absolute transformed differences et plus particulièrement des transformées de hadamard, ou bien de l'erreur quadratique ou sse, acronyme de l'anglais sum of squared error, ou bien encore de la somme des différences au carré ou ssd, acronyme de l'anglais sum of squared differences.

Ce type d'algorithme effectue donc le calcul de la différence entre le bloc ou macrobloc source et le bloc ou macrobloc reconstruit, pour chaque mode. Le bloc reconstruit nécessite de connaître le bloc prédit ou bloc de prédiction, duquel est déduit le bloc de résidus, les coefficients DCT, acronyme de l'anglais Discrete Cosine Transform, du bloc de résidus, la quantification des coefficients DCT, la quantification inverse et la DCT inverse. Celle-ci, qui représente le bloc de résidus reconstruit, est ajoutée au bloc de prédiction pour fournir le bloc source reconstruit. Dans le cas d'un mode intra pur, c'est à dire sans prédiction, la valeur du bloc de prédiction est prise égale à zéro.

De tels algorithmes sont décrits par exemple dans la demande de brevet européenne publiée le 1er mars 2000 sous la référence EP0982951 et intitulé « picture compression process » ou bien dans le document de H Schwarz, T Wiegand, intitulé « An improved MPEG4 coder using lagrangian coder control », March 2001.

Les différentes mesures de la qualité de restitution sad, satd, ssd et psnr, s'expriment par les expressions suivantes:

$$\text{sad} = \left( \sum_{i,j=0}^{i,j=15} \left| \text{MB}_{\text{src}}(i,j) - \text{MB}_{\text{rec}}(i,j) \right| \right)$$

$$satd = \left( \sum_{i,j=0}^{i,j=15} \left| HadamT(MB_{src}(i,j) - MB_{rec}(i,j)) \right| \right)$$

$$sse = \left( \sum_{i,j=0}^{i,j=15} (MB_{src}(i,j) - MB_{rec}(i,j))^2 \right)$$

$$psnr = -10Log\left( \sum_{i,j=0}^{i,j=15} (MB_{src}(i,j) - MB_{rec}(i,j))^2 \right)/(255^2 \times 256)$$

avec :

i, j : indices lignes et colonnes des pixels contenus dans le macrobloc MB,
$MB_{src}$ macrobloc source,
$MB_{rec}$ macrobloc reconstruit.

La mesure satd correspond à la somme de la valeur absolue des coefficients transformés de hadamard des différences contenues, pour cet exemple, dans un bloc de taille 16x16 pixels.
Le critère de décision a posteriori utilisé dans l'algorithme de référence MPEG4-AVC est le suivant :

$$J_{mode} = sse_{mode} + \lambda_{mode}.MB_{cost}$$

où

- $J_{mode}$ est l'entité à partir de laquelle va être recherché le « coût » minimum et qui permet de sélectionner le mode de codage final,
- sse est la mesure de l'erreur quadratique moyenne entre les pixels source et les pixels après reconstruction, c'est à dire après quantification inverse $Q^{-1}$ puis transformée inverse $DCT^{-1}$ puis adjonction du bloc de prédiction,
- $\lambda_{mode}$, classiquement appelé facteur Lagrangien, est un facteur de pondération dépendant du pas de quantification QP,
- $MB_{cost}$ le coût de codage réel du macrobloc.

Les algorithmes de sélection de mode de codage a priori sont moins efficaces que les algorithmes a posteriori, alors que ces derniers nécessitent des calculs plus complexes, très demandeurs en temps de traitement.
Par exemple, le document de Hyungjoon Kim et Yucel Altunbasak, intitulé « Low-complexity macroblock mode selection for H.264/AVC encoders », International Conference on Image Processing (ICIP), 2004, divulgue, la sélection du mode de codage en fonction des estimations du coût de codage du bloc source et en fonction des estimations des erreurs de codage pour les différents modes de codage testés. Ces estimations nécessitent la reconstruction du bloc source pour chacun de ces modes testés.
Un des buts de l'invention est de pallier les inconvénients précités.
L'invention a pour objet un procédé de codage d'une image vidéo d'une séquence d'images comportant une découpe de l'image en blocs puis un codage d'un bloc source selon un mode de codage parmi au moins des modes de codage prédictifs de type inter images exploitant des informations d'une image précédente et/ou suivante et/ou de type intra images exploitant des informations dans l'image courante, un mode de codage prédictif d'un bloc source effectuant une transformation cosinus puis une quantification d'un bloc de résidus, qui est la différence entre le bloc source et un bloc de prédiction calculé à partir des dites informations, pour fournir des coefficients quantifiés, **caractérisé en ce que** la sélection du dit mode de codage est effectuée, pour le dit bloc source, en fonction des estimations de l'erreur de codage et des estimations du coût du codage du bloc source pour les différents modes de codage testés, l'erreur de codage étant estimée, pour un mode de codage, en fonction de la somme des valeurs absolues des coefficients obtenus après une transformation mathématique dans le domaine fréquentiel du bloc de résidus relatif à ce mode de codage et en fonction de la somme des valeurs absolues des dits coefficients quantifiés correspondant à ce mode de codage.

Selon une mise en oeuvre particulière, l'estimation de l'erreur de codage est égale à :

$$SATD_{dec\_est} = SATD_{pred} - f(QP)x.Energy_{TQ}$$

avec

- SATD$_{pred,}$ la somme des valeurs absolues des coefficients du bloc de résidus obtenus après une transformation Hadamard,
- QP le pas de quantification,
- f(QP) une fonction prédéfinie du pas de quantification,
- Energy la somme des dits coefficients quantifiés.

Selon une mise en oeuvre particulière, la fonction f(QP) est égale à f(QP) = $\delta$ x (QP)$^2$, $\delta$ étant une constante prédéfinie.

Selon une mise en oeuvre particulière, la sélection du mode de codage est fonction d'un paramètre J$_{mode}$:

$$J_{mode} = SATD_{dec\_est} + W_{QP} (\alpha.Header_{cost} + \gamma.Energy_{TQ})$$

avec

- W$_{QP}$ une valeur fonction du pas de quantification QP,
- Header, un coût en bits d'une entête de codage pour le codage du macrobloc dans un flux de données,
- $\alpha$ et $\gamma$ des paramètres de valeur prédéfinie.

Selon une mise en oeuvre particulière, le paramètre W$_{QP}$ est proportionnel au pas de quantification QP.
Selon une mise en oeuvre particulière, $\delta$ =1/136 à 10% près, $\alpha$ = 2, $\gamma$ = 4 et W$_{QP}$ = QP/5.
Selon une mise en oeuvre particulière, une estimation de mouvement effectue un calcul de corrélation à partir de la transformée de Hadamard pour obtenir les dites informations de l'image précédente.
L'invention concerne également un dispositif de codage pour la mise en oeuvre du procédé précédemment décrit, comprenant un circuit de traitement et un circuit mémoire pour le calcul des estimations d'erreurs de codage pour les différents modes de codage, **caractérisé en ce que** le circuit de traitement effectue le calcul des estimations SATD$_{dec\_est}$ selon l'expression

$$SATD_{dec\_est} = SATD_{pred} - f(QP)x.Energy_{TQ}$$

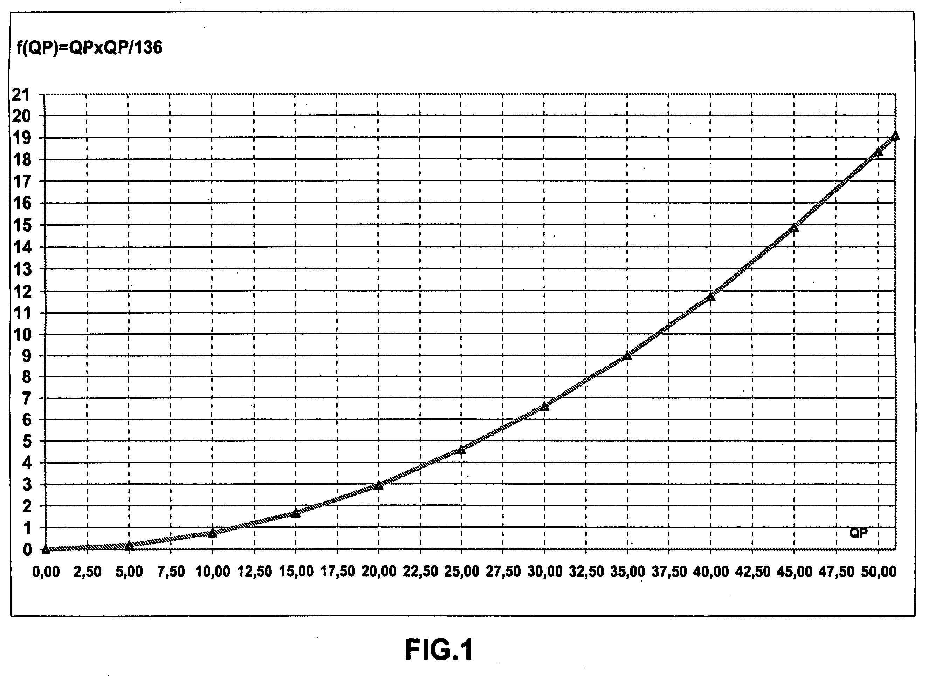

et en ce que le circuit mémoire comporte des valeurs prédéterminées de la fonction f(QP) pour différentes valeurs du pas de quantification QP réparties sur sa gamme d'évolution.
Le procédé proposé se situe entre les techniques a priori et a posteriori, c'est à dire qu'il met en oeuvre des paramètres issus de mesures a posteriori et des estimées issues de mesures a priori.
Grâce à l'invention, il est possible d'obtenir une performance débit-distorsion proche d'une décision basée a posteriori avec une complexité algorithmique moindre, la reconstruction des macroblocs n'étant pas nécessaire.
D'autres particularités et avantages de l'invention apparaîtront clairement dans la description suivante donnée à titre d'exemple non limitatif et faite en regard de la figure 1.
Le procédé de codage, par exemple de type MPEG 4 part 10 ou H264, réalise un codage en mode intra ou en mode inter du macrobloc source MB$_{src}$.
Le codage en mode inter effectue une différence entre le macrobloc source MB$_{src}$ et un macrobloc prédit MB$_{pred}$ calculé à partir d'une ou plusieurs images de référence précédemment codées, reconstruites par le décodeur local, et d'informations de mouvement désignant le ou les blocs reconstruits corrélés au bloc source, à prendre en compte pour le calcul du macrobloc de prédiction.
Le codage en mode intra de type prédictif prend en compte, pour le calcul du macrobloc de prédiction, des informations dans l'image à laquelle appartient le macrobloc source à coder, par exemple des information de luminance moyenne ou des valeurs de luminance de pixels de macroblocs voisins précédemment codés. La norme H264 décrit un certain nombre de modes de prédiction intra.

L'invention concerne un procédé de codage mettant en oeuvre un algorithme de décision de codage s'inspirant du critère de décision a posteriori présenté précédemment ($J_{mode}$).

Cette décision de codage est basée sur les mesures des paramètres suivants :

- une mesure a priori, qui est le calcul de la $SATD_{pred}$, c'est à dire une mesure appliquée sur les pixels à encoder ou erreur résiduelle de prédiction ou bloc de résidus dans le domaine pixel pour les modes de codage intra et inter image,
- une mesure en rapport avec la quantification des coefficients comportant un premier terme $Energy_{TQ}$ et un second terme $Header_{cost}$ :

  $Energy_{TQ}$ correspond à la somme des coefficients après quantification, coefficients obtenus après transformation DCT du bloc de résidus dans le domaine pixels. Ce paramètre va renseigner en quelque sorte sur la quantité d'information nécessaire pour pouvoir reconstruire le macrobloc.
  $Header_{cost}$, correspond au coût de codage de l'entête du macrobloc. Ayant connaissance de toutes les informations relatives au macrobloc, dont le nombre de coefficients à encoder, le coût de codage de l'entête peut être précisément calculé.

Cette dernière mesure est pondérée par le pas de quantification QP utilisé pour quantifier les coefficients du macrobloc, par l'intermédiaire d'un facteur de pondération $W_{QP}$ dépendant directement du pas de quantification.

Ainsi, l'algorithme de décision de mode de codage est donné par l'expression suivante :

$$J_{mode} = SATD_{dec\_est} + W_{QP} (\alpha.Header_{cost} + \gamma.Energy_{TQ})$$

- $SATD_{dec\_est}$ est la SATD décodée estimée, explicitée plus bas. Elle a pour rôle de fournir une estimation de l'erreur de reconstruction ou erreur de décodage, basée SATD, après codage.
- $W_{QP}$ est un facteur de pondération dépendant du pas de quantification QP.
- $(\alpha.Header_{cost} + \gamma.Energy_{TQ})$, est une expression destinée à délivrer une information dont la valeur se doit d'être le plus proche de l'évolution du coût de codage du macrobloc. Les paramètres $\alpha$, $\gamma$ permettent de pondérer les quantités $Header_{cost}$ et $Energy_{TQ}$. étant entendu que $Leader_{cost}$ représente un coût de codage en bits de l'entête du macrobloc tandis que $Energy_{TQ}$ correspond à une somme des coefficients après quantification.

La valeur de $J_{mode}$ est calculée pour chacun des modes de codage disponibles et celui donnant la valeur minimale est retenu pour le codage effectif du macrobloc.

L'estimation de l'erreur $SATD_{dec\_est}$ entre la source et l'image reconstruite est approximée dans un premier temps en prenant en compte l'erreur de prédiction $SATD_{pred}$ correspondant à la somme des coefficients du bloc de résidus dans le domaine pixel transformé Hadamard puis dans un deuxième temps cette erreur de prédiction $SATD_{pred}$ est minorée à l'aide de la somme pondérée des valeurs quantifiées des coefficients de ce bloc de résidus dans le domaine pixels transformé DCT.

Ainsi, la relation permettant d'obtenir une estimation de l'erreur inhérente à l'encodage $SATD_{dec\_est}$ à partir de $SATD_{pred}$ est la suivante :

$$SATD_{dec\_est} = SATD_{pred} - f(QP).Energy_{TQ}$$

où :

- $SATD_{pred}$ est la SATD calculée en a priori entre le macrobloc source et le macrobloc de prédiction, et qui correspond à l'erreur de prédiction et à l'équation satd précédemment décrite dans laquelle le terme $MB_{rec}$ est remplacé par $MB_{pred}$,

- $Energie_{TQ} = \sum_{i \in MB} |TQ_i|$ est la somme de la valeur absolue des coefficients après transformation DCT et quantification,

- f(QP) est un paramètre de pondération, fonction de la valeur du pas de quantification QP.

Le pas de quantification utilisé est calculé de manière classique, par exemple en exploitant un algorithme de régulation de débit.

Dans le cas où l'on obtient une valeur négative pour $SATD_{dec\_est}$, la valeur zéro est forcée.

Le terme $SATD_{pred}$ correspond à la somme des coefficients du bloc de résidus, obtenus après transformation Hadamard du bloc de résidus dans le domaine pixels. La transformation Hadamard est ici proposée car généralement précédemment calculée lors de l'estimation de mouvement et donc disponible. Elle est également de calcul plus simple que la transformée DCT. Ce choix n'est cependant pas limitatif et l'utilisation de la transformation DCT du bloc de résidus est aussi du domaine de l'invention.

Le terme $Energy_{TQ'}$ correspond à la somme des coefficients quantifiés, obtenus après transformation DCT et quantification du bloc de résidus dans le domaine pixels et le terme f(QP) détermine une valeur en fonction du pas de quantification.

La valeur $SATD_{dec\_est}$ permet d'estimer l'erreur de codage ou de reconstruction, c'est à dire l'erreur entre le bloc source et le bloc reconstruit sans qu'il soit nécessaire de calculer le bloc reconstruit, c'est à dire le bloc source décodé.

Si par exemple les valeurs de luminance du bloc de résidu sont suffisamment faibles pour donner des coefficients quantifiés nuls, c'est à dire inférieurs au pas de quantification, la valeur Energy est égale à zéro et l'erreur de codage ou de reconstruction est estimée à $SATD_{pred}$, correspondant au bloc de résidus transformé selon la transformation Hadamard, cette information relative aux résidus étant effectivement « perdue » lors du codage.

Si par exemple le bloc prédit est nul, cas du mode intra pur, c'est à dire sans prédiction, la valeur $SATD_{pred}$ correspond au bloc source transformé, valeur à laquelle est soustraite une valeur représentative du bloc source transformé après quantification, pour l'estimation de l'erreur de codage.

Cette valeur $SATD_{pred}$ relative à la transformée Hadamard de la différence entre le bloc source et le bloc prédit, peut être considérée comme une estimation de l'erreur maximum de codage ou erreur de prédiction, le bloc prédit exploité au codeur et au décodeur étant le même. Cette erreur maximum devient l'erreur estimée dans le cas où le bloc de résidus quantifié est nul, donnant un bloc source reconstruit au décodeur égal au bloc prédit.

Mais l'erreur de prédiction est minorée par la transmission du bloc de résidus quantifié et codé, le bloc reconstruit au décodeur étant alors le bloc prédit auquel est ajouté le du bloc de résidu décodé. Dans ce cas, l'erreur de reconstruction, au décodeur, est inférieure à l'erreur de prédiction initiale précédemment définie et l'estimation de l'erreur de reconstruction correspond alors à l'estimation de l'erreur de prédiction minorée d'une estimation de la valeur de décodage du bloc de résidus, basée sur le bloc de coefficients quantifiés, qui est le bloc de résidus transformé et quantifié, et sur le pas de quantification.

La figure 1 représente un exemple de courbe correspondant à la fonction f(QP), déterminée empiriquement, pour une valeur du pas de quantification comprise entre 0 et 51.

Cette courbe peut être approximée par une fonction puissance de deux du pas de quantification :

$$f(QP) = \delta \times (QP)^2$$

Plus précisément, la valeur de $\delta$ déterminée de manière empirique est égale à 1/136,314, cette valeur pouvant bien évidemment être choisie dans ce voisinage, par exemple dans une fourchette de plus ou moins 10%, sans pour cela affecter de manière sensible l'efficacité de cette pondération du paramètre énergie,

Dans un exemple de réalisation, les paramètres $W_{QP}$, $\alpha$ et $\gamma$ ont pour valeurs :

$$\alpha = 2$$

$$\gamma = 4$$

$$W_{QP} = QP/5$$

Ces valeurs ont été définies après un nombre important de simulations sur un jeu de séquences varié afin que l'algorithme ait un comportement le plus proche possible d'un algorithme de décision a posteriori et cela quelle que soit la valeur du pas de quantification QP.

A titre de comparaison, des résultats de simulations permettent de positionner les performances de cet algorithme vis à vis de décisions de codage totalement a priori et a posteriori. Le débit obtenu avec l'algorithme a posteriori est pris comme référence dans le tableau ci-dessous.

|  | Nouvel algorithme | Algorithme a priori |
|---|---|---|
| auto+ | 4,3 | 17,87 |
| bball | 4,75 | 11,09 |
| bigdil | 3,86 | 9,9 |
| bus | 2,95 | 11,2 |
| ski | 4,26 | 18,26 |
| stefan | 3,23 | 12,52 |

Dans la première colonne sont indiquées des séquences types bien connues dans le domaine du traitement d'images. La deuxième colonne indique, pour chaque séquence, l'augmentation du débit en appliquant l'algorithme selon l'invention, en pourcentage du débit relatif à un algorithme de décision a posteriori, la colonne 3 indique l'augmentation de débit relative pour un algorithme a priori. Le gain en pourcentage en terme de débit est calculé à l'aide de la comparaison des courbes débit/distorsion entre elles selon la méthode recommandée par G Bjontegaarg « Calculation of average PSNR differences between RD-Curves", document VCEG-M33, Mars, 2001.

L'invention concerne également un dispositif de codage de séquences d'images vidéo. Il comporte, de manière connue, un circuit de traitement, un circuit d'estimation de mouvement, un circuit de transformation DCT, un quantificateur...exploités pour le codage, par exemple selon la norme MPEG 4-AVC. Le circuit de traitement met en oeuvre, entre autres, les algorithmes de décision de mode de codage tels que précédemment décrits. La fonction f(QP) est mémorisée et le circuit de traitement effectue le calcul de cette fonction pour la valeur du pas de quantification correspondant au macrobloc à coder.

Selon une mise en oeuvre particulière, ce calcul est remplacé par la mémorisation de points de la courbe pour différentes valeurs du pas de quantification réparties sur sa plage d'évolution. Le circuit de traitement va chercher la valeur f(QP) dans cette mémoire à l'adresse correspondant au pas de quantification utilisé. Cette mémoire peut également contenir directement, c'est à dire sans exploiter de courbe f(QP), les valeurs obtenues lors des calculs empiriques.

L'algorithme de décision, de par sa conception, estimation de la distorsion, estimation du coût de codage avec dépendance par rapport au pas de quantification QP, peut être mis en oeuvre dans tout type de codeur permettant de telles estimations et en particulier pour la sélection des sous-partitions composant un macrobloc. Si l'on considère la norme de codage mpeg4-AVC et s'agissant par exemple du mode de codage inter16x8, qui correspond à un macrobloc composé de deux sous partitions de taille 16x8 pixels, l'algorithme décrit peut être utilisé pour déterminer pour chacune des sous partitions la meilleure prédiction parmi celles issues des différentes images de référence obtenues, il s'agit des sous-partitions de prédiction, via l'estimateur de mouvement.

Dans le même esprit, et si on ne se soucie pas de la charge de calcul, ce type d'algorithme peut être mis en oeuvre pour le calcul de l'estimation de mouvement. Ainsi, le critère permettant d'estimer la bonne mise en correspondance d'un bloc de prédiction, via le vecteur de mouvement, avec le bloc courant à prédire, critère basé généralement sur des mesures de types sad, satd voire sse, peut être remplacé par l'algorithme décrit dans ce document. Dès l'estimation de mouvement, la mise en oeuvre de ce critère permet d'avoir une idée de l'impact sur le « coût » de codage de type $J_{mode}$. Il est ainsi possible de prendre en compte cette information de coût lors du calcul de l'estimation de mouvement et du choix des vecteurs mouvement.

Concernant la mise en oeuvre de ce critère, diverses déclinaisons sont possibles pour les paramètres ci-dessous :

$$SATD_{dec\_est} = SATD_{pred} - f(QP) \cdot Energy_{TQ}$$

$$Energie_{TQ} = \sum_{i \in MB} |TQ_i|$$

Ainsi, par exemple :

- l'ensemble des paramètres est calculé à la fois sur les pixels de luminance et de chrominance du macrobloc à encoder,
- l'ensemble des paramètres est calculé uniquement sur le signal de luminance,

Dans une autre variante :

- le premier terme $SATD_{dec\_est}$ est calculé uniquement sur la luminance
- le deuxième terme $(\alpha.Header_{cost} + \gamma.Energy_{TQ})$ est calculé sur la luminance et la chrominance.

Ainsi, dans cette variante on privilégiera d'une manière générale la qualité de la luminance au détriment de la chrominance puisque on ne considère la chrominance que dans le deuxième terme, deuxième terme qui est sensé être le pendant du coût de codage du critère de décision a posteriori ($MB_{cost}$). Le choix du mode étant déterminé à partir de la valeur minimum de $J_{mode}$, pour une même valeur de $Energy_{TQ\_luminance}$ relative à la luminance, c'est bien la valeur de $Energy_{TQ\_chrominance}$, relative à la chrominance qui fera la différence.

Enfin, on peut noter que dans l'expression :

$$J_{mode} = SATD_{dec\_est} + W_{QP} (\alpha.Header_{cost} + \gamma.Energy_{TQ})$$

le terme $W_{QP}$ joue le rôle de pondération entre une qualité de restitution probable et un coût de codage probable. De fait, si on souhaite privilégier la qualité de restitution, on diminuera alors le terme $W_{QP}$, alors que, à l'inverse, si l'on recherche les coûts de codage probables les plus bas, au détriment de la qualité de restitution, le terme $W_{QP}$ sera augmenté.

**Revendications**

1. Procédé de codage d'une image vidéo d'une séquence d'images comportant une découpe de l'image en blocs puis un codage d'un bloc source selon un mode de codage sélectionné parmi au moins des modes de codage prédictifs de type inter images exploitant des informations d'une image précédente et/ou suivante et/ou de type intra images exploitant des informations dans l'image courante, un mode de codage prédictif d'un bloc source effectuant une transformation cosinus puis une quantification d'un bloc de résidus, qui est la différence entre le bloc source et un bloc de prédiction calculé à partir des dites informations, pour fournir des coefficients quantifiés, la sélection du dit mode de codage étant effectuée, pour le dit bloc source, en fonction des estimations de l'erreur de codage et des estimations du coût du codage du bloc source pour les différents modes de codage testés, **caractérisé en ce que** l'erreur de codage est estimée, pour un mode de codage, en fonction de la somme des valeurs absolues des coefficients obtenus après une transformation mathématique dans le domaine fréquentiel du bloc de résidus relatif à ce mode de codage et en fonction de la somme des valeurs absolues des dits coefficients quantifiés correspondant à ce mode de codage.

2. Procédé selon la revendication 1, **caractérisé en ce que** l'estimation de l'erreur de codage est égale à :

$$SATD_{dec\_est} = SATD_{pred} - f(QP)x.Energy_{TQ}$$

avec

- $SATD_{pred}$, la somme des valeurs absolues des coefficients du bloc de résidus obtenus après une transformation Hadamard,
- QP le pas de quantification,
- f(QP) une fonction prédéfinie du pas de quantification,
- $Energy_{TQ}$ la somme des valeurs absolues des dits coefficients quantifiés.
L'indice TQ ne doit pas être souligné, le terme "$Energy_{TQ}$" est à imprimer

3. Procédé selon la revendication 2 **caractérisé en ce que** la fonction f(OP) est égale à $f(QP) = \delta \times (QP)^2$, $\delta$ étant

une constante prédéfinie.

**4.** Procédé selon la revendication 2, **caractérisé en ce que** la sélection du mode de codage est fonction d'un paramètre $J_{mode}$:

$$J_{mode} = SATD_{dec\_est} + W_{QP} (\alpha.Header_{cost} + \gamma.Energy_{TQ})$$

avec

- $W_{QP}$ une valeur fonction du pas de quantification QP,
- Header, un coût en bits d'une entête de codage pour le codage du macrobloc dans un flux de données,
- a et $\gamma$ des paramètres de valeur prédéfinie.

**5.** Procédé selon la revendication 4, **caractérisé en ce que** le paramètre $W_{QP}$ est proportionnel au pas de quantification QP.

**6.** Procédé selon la revendication 5, **caractérisé en ce que** $\delta$ =1/136 à 10% près, $\alpha$ = 2, $\gamma$ = 4 et $W_{QP}$ = QP/5.

**7.** Procédé selon la revendication 2, **caractérisé en ce qu'**une estimation de mouvement effectue un calcul de corrélation à partir de la transformée de Hadamard pour obtenir les dites informations de l'image précédente.

**8.** Dispositif de codage pour la mise en oeuvre du procédé selon la revendication 1, comprenant un circuit de traitement et un circuit mémoire pour le calcul des estimations d'erreurs de codage pour les différents modes de codage, **caractérisé en ce que** le circuit de traitement effectue une estimation de l'erreur de codage selon l'expression

$$SATD_{dec\_est} = SATD_{pred} - f(QP)x.Energy_{TQ}$$

avec

- $SATD_{pred}$, la somme des valeurs absolues des coefficients du bloc de résidus obtenus après une transfomation Hadamard,
- QP le pas de quantification,
- f(QP) une fonction prédéfinie du pas de quantification,
- $Energy_{TQ}$ la somme des valeurs absolues des dits coefficients quantifiés,
et **en ce que** le circuit mémoire comporte des valeurs prédéterminées de la fonction f(QP) pour différentes valeurs du pas de quantification QP réparties sur sa gamme d'évolution

**Claims**

**1.** Method for coding a video picture of a sequence of pictures comprising a splitting of the picture into blocks then a coding of a source block according to a coding mode from at least one of the predictive coding modes of inter picture type using information from a preceding and/or following picture and/or of intra picture type using information from the current picture, a predictive coding mode of a source block carrying out a cosine transformation then a quantization of a residue block, that is the difference between the source block and a prediction block calculated from said information, to supply quantized coefficients, the selection of said coding mode being carried out, for said source block, according to coding error estimations and estimations of the cost of coding the source block for the different coding modes tested, **characterized in that** the coding error is estimated, for a coding mode, as a function of the sum of the absolute values of the coefficients obtained after a mathematical transformation in the frequency domain of the residue block relative to this coding mode and as a function of the sum of the absolute values of said quantized coefficients corresponding to this coding mode.

**2.** Method according to claim 1, **characterized in that** the coding error estimation is equal to:

$$SATD_{dec\_est} = SATD_{pred} - f(QP)x.Energy_{TQ}$$

with

- $SATD_{pred}$, the sum of absolute values of the coefficients of residue blocks obtained after a Hadamard transformation,
- QP the quantization step,
- f(QP) a predefined function of the quantization step,
- $Energy_{TQ}$ the sum of said quantized coefficients.

3. Method according to claim 2 **characterized in that** the f(QP) function is equal to $f(QP) = \delta \times (QP)^2$, $\delta$ being a predefined constant.

4. Method according to claim 2, **characterized in that** the selection of the coding mode is a function of a parameter $J_{mode}$:

$$J_{mode} = SATD_{dec\_est} + W_{QP} (\alpha.Header_{cost} + \gamma.Energy_{TQ})$$

with

- $W_{QP}$ ,a value according to the quantization step QP,
- Header, a cost in bits of a coding header for the coding of the macroblock in the data stream,
- $\alpha$ and $\gamma$, predefined value parameters.

5. Method according to claim 4, **characterized in that** the parameter $W_{QP}$ is proportional to the quantization step QP.

6. Method according to claim 5, **characterized in that** $\delta =1/136$ to within 10%, $\alpha = 2$, $\gamma = 4$ and $W_{QP} = QP/5$.

7. Method according to claim 2, **characterized in that** a motion estimation carries out a correlation calculation from the Hadamard transform to obtain said information from the preceding picture.

8. Coding device for implementing the method according to claim 1, comprising a processing circuit and a memory circuit to calculate the coding error estimations for the different coding modes, **characterized in that** the processing circuit carries out an estimation of coding error according to the expression

$$SATD_{dec\_est} = SATD_{pred} - f(QP)x.Energy_{TQ}$$

with

- $SATD_{pred,}$ the sum of absolute values of the coefficients of the residue blocks obtained after a Hadamard transformation,
- QP the quantization step,
- f(QP) a predefined function of the quantization step,
- $Energy_{TQ}$ the sum of said quantized coefficients,
and **in that** the memory circuit comprises predetermined values of the function f(QP) for different values of the quantization step QP distributed over its evolution range.

**Patentansprüche**

1. Verfahren zur Codierung eines Videobilds einer Bildersequenz mit Schneiden des Bilds in Blöcke und anschließender Codierung eines Quellblocks gemäß einem Codiermodus unter mindestens prädiktiven Codiermodi des Typs Interbildmodus mit Nutzung von Informationen eines vorigen und/oder nachfolgenden Bilds und/oder des Typs Intrabildmodus mit Nutzung von Informationen im aktuellen Bild, wobei ein prädiktiver Codiermodus eines Quellblocks eine Cosinus-Transformation und anschließend eine Quantisierung eines Reste-Blocks durchführt, bei dem es sich um die Differenz zwischen dem Quellblock und einem prädiktiven, ausgehend von den genannten Informationen berechneten Block, handelt, um quantisierte Koeffizienten zu liefern, die Auswahl des Codiermodus für den Quellblock in Abhängigkeit von den Schätzungen des Codierungsfehlers und den Schätzungen der Kosten für die Codierung des Quellblocks für die unterschiedlichen getesteten Codiermodi erfolgt, **dadurch gekennzeichnet, dass** der Codierungsfehler für einen Codiermodus in Abhängigkeit von der Summe der Beträge der Koeffizienten, die sich nach einer mathematischen Transformation in dem Frequenzbereich des diesen Codiermodus betreffenden Reste-Blocks ergeben, sowie in Abhängigkeit von der Summe der Beträge der diesem Codiermodus entsprechenden quantisierten Koeffizienten geschätzt wird.

2. Verfahren nach Anspruch 1, **dadurch gekennzeichnet, dass** die Schätzung des Codierungsfehlers gleich

$$SATD_{dec\_est} = SATD_{pred} - f(QP)x.Energy_{TQ}$$

ist, wobei

- $SATD_{pred}$, die Summe der Beträge der Koeffizienten des Reste-Blocks, die sich nach einer Hadamard-Transformation ergeben, ist,
- QP die Quantisierungsweite ist,
- f(QP) eine vorbestimmte Funktion der Quantisierungsweite ist,
- $Energy_{TQ}$ die Summe der quantisierten Koeffizienten ist.

3. Verfahren nach Anspruch 2 **dadurch gekennzeichnet, dass** di Funktion f(QP) gleich $f(QP) = \delta \times (QP)^2$ , wobei $\delta$ eine vorbestimmte Konstante ist.

4. Verfahren nach Anspruch 2, **dadurch gekennzeichnet, dass** die Auswahl des Codiermodus von einem Parameter $J_{mode}$ abhängt:

$$J_{mode} = SATD_{dec\_est} + W_{QP} (\alpha.Header_{cost} + \gamma.Energy_{TQ} ),$$

wobei

- $W_{QP}$ ein Wert ist, der von der Quantisierungsweite QP abhängt,
- Header Kosten in Bits für einen Codierungsheader für die Makroblockcodierung in einem Datenstrom darstellt,
- $\alpha$ und $\gamma$ Parameter mit einem vorbestimmten Wert sind.

5. Verfahren nach Anspruch 4, **dadurch gekennzeichnet, dass** der Parameter $W_{QP}$ proportional zur Quantisierungsweite QP ist.

6. Verfahren nach Anspruch 5, **dadurch gekennzeichnet, dass** $\delta = 1/136 \pm 10\%$, $\alpha = 2$, $\gamma = 4$ und $W_{QP} = QP/5$.

7. Verfahren nach Anspruch 2, **dadurch gekennzeichnet, dass** eine Bewegungsschätzung eine Korrelationsberechnung ausgehend von der Hadamard-Transformierten durchführt, um die Informationen des vorigen Bilds zu erhalten.

8. Codiervorrichtung zur Umsetzung des Verfahrens nach Anspruch 1, mit einer Verarbeitungsschaltung und einer Speicherschaltung für die Berechnung der Schätzungen von Codierungsfehlern für die unterschiedlichen Codiermodi, **dadurch gekennzeichnet, dass** die Verarbeitungsschaltung eine Schätzung des Codierungsfehlers gemäß dem Ausdruck

$$SATD_{dec\_est} = SATD_{pred} - f(QP)x.Energy_{TQ}$$

durchführt, wobei

- SATDp$_{red}$, die Summe der Beträge der Koeffizienten des Reste-Blocks, die sich nach einer Hadamard-Transformation ergeben, ist,
- QP die Quantisierungsweite ist,
- f(QP) eine vorbestimmte Funktion der Quantisierungsweite ist,
- Energy$_{TQ}$ die Summe der quantisierten Koeffizienten ist,
und dass die Speicherschaltung vorbestimmte Werte der Funktion f(QP) für unterschiedliche, auf deren Entwicklungsbereich verteilte Werte der Quantisierungsweite QP aufweist.

FIG.1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0982951 A

**Littérature non-brevet citée dans la description**

- **H Schwarz ; T Wiegand.** *An improved MPEG4 coder using lagrangian coder control,* Mars 2001
- **Hyungjoon Kim ; Yucel Altunbasak.** Low-complexity macroblock mode selection for H.264/AVC encoders. *International Conference on Image Processing,* 2004
- **G Bjontegaarg.** Calculation of average PSNR differences between RD-Curves. *VCEG-M33,* Mars 2001